# EUROPEAN PATENT SPECIFICATION

(11) **EP 3 116 322 B1**
(45) Date of publication and mention of the grant of the patent: **30.01.2019**
(21) Application number: 15718585.1
(22) Date of filing: 10.03.2015
(51) Int. Cl.: A21D 13/17, A21D 2/18, A21D 2/36, A21D 15/02, A21D 17/00

(54) **FORMULATIONS WITH HYDROCOLLOIDS FOR THE PREPARATION OF CUSTARD TARTS READY FOR CONSUPTION BY HEATING IN MICROWAVE OVEN AND PROCESS FOR THEIR PRODUCTION**
FORMULIERUNGEN MIT HYDROKOLLOIDEN ZUR HERSTELLUNG VON PUDDINGTÖRTCHEN, DIE DURCH ERWÄRMUNG IM MIKROWELLENOFEN VERZEHRFERTIG SIND, UND VERFAHREN ZU DEREN HERSTELLUNG
COMPOSITIONS COMPRENANT DES HYDROCOLLOÏDES POUR LA PRÉPARATION DE TARTES A LA CRÈME POUR CONSOMMER APRÈS CUISSON AU FOUR MICRON-ONDES ET PROCÉDÉ POUR LEUR PRÉPARATION

(30) Priority: 12.03.2014 PT 10750714
(43) Date of publication of application: 18.01.2017
(73) Proprietor: Universidade de Aveiro, 3810-193 Aveiro (PT); Mealfood - Fabrico de Refeições e Pratos Pré-cozinhados Lda., 3850-626 Albergaria-a- Velha (PT)
(72) Inventor: COIMBRA RODRIGUES DA SILVA, Manuel António, P-3810-083 Aveiro (PT); VERDE MARTINS COELHO, Elisabete, P-3800-358 Aveiro (PT); BASTOS, Ana Rita, P-3750-811 Valongo do Vouga - Àgueda (PT); DE OLIVEIRA SANTOS, José Francisco, P-3750-141 Águeda (PT)
(74) Representative: Ferreira, Maria Silvina
(86) International application number: PCT/IB2015/051737
(87) International publication number: WO 2015/136442

(56) References cited:
- EP-A1- 1 120 043
- EP-A1- 2 336 191
- WO-A1-95/07025
- WO-A1-97/25869
- WO-A1-2011/109300
- AU-A- 1 136 200
- US-A1- 2007 020 369
- US-A1- 2009 311 387
- DATABASE WPI Week 200569 Thomson Scientific, London, GB; AN 2005-670401 XP002740813, & JP 2005 269993 A (QP CORP) 6 October 2005 (2005-10-06)
- DATABASE WPI Week 200657 Thomson Scientific, London, GB; AN 2006-552892 XP002740814, & JP 2006 191873 A (KANEKA CORP) 27 July 2006 (2006-07-27)

## Description

### Technical Domain

The present application describes modified formulations of puff pastry and custard cream for the preparation of custard tarts, which can be easily heated in domestic microwave ovens, resulting in products with the characteristics of the custard tart just taken out of a conventional oven. Further disclosed is the production of custard tarts process, whose puff pastry and custard cream comprises the modified formulations described.

### Background

The custard tarts are made of puff pastry on the outside, filled with custard cream. This cake, after cooked, is characterized by a crispy dough and a cream with a bright coating with slightly burnt aspect.

The custard tarts are usually consumed fresh. However, the market already has precooked quick-frozen custard tarts, the cooking being completed by the consumer in a conventional oven. These custard tarts require a confection time of at least 15 minutes in a preheated oven at 200-250°C, these conditions being necessary to obtain a final product with the crunchy and crispy puff pastry characteristics of the custard tart. It is therefore a high time and energy consumption process when compared to a heating process that could be done using a microwave oven, currently available in most households.

The use of a domestic microwave oven, even using the "grill", will however not allow obtaining the required temperatures for the custard tart to bake, given the heating principle on which it is based, by vibration of water molecules, the maximum temperature reached not being very different from 100 °C, boiling temperature of the water at atmospheric pressure. The conservation by simple freezing or quick-freezing of a confectioned custard tart, also does not allow, by reheating in a microwave oven, obtaining a custard tart with the crunchy characteristics of the fresh product. Therefore, it is verified that there are no solutions on the market for a confectioned and quick-frozen custard tart that can be reheated in a domestic microwave oven.

The use of a domestic microwave oven for reheating custard tarts does not yet exist on the market because heating in microwave oven leads to a higher heating of the custard cream compared to the puff pastry. The overheating of the custard cream leads to water migration from the cream to the puff pastry with resultant loss of crunchy and crispy texture of the dough.

Hydrocolloids are widely used in the food industry as ingredients for water retention preventing its migration. It is mainly used as thickener, gelling agent, emulsifying agent and reduction of starch retrogradation (Kohajdová e Karovičová, 2009). The hydrocolloids, owing to its high water retention capacity, also confer stability to products subjected to freeze/thaw cycles, thus preventing the formation of ice crystals (Barcenas et al., 2004). The most commonly used hydrocolloids in pastry are cellulose derivatives (E466 - carboxymethylcellulose (CMC), E464 - hydroxypropylmethylcellulose (HPMC) and E461 - methylcellulose, the galactomannans (E412 - guar gum, E410 - locust bean gum), E407 - carrageenans (kappa, iota and lambda-carrageenan) and E415 xanthan (Kohajdová e Karovičová, 2009). In cellulose derivatives, the substitution percentage of hydroxypropyl and methyl groups, confers different rheological properties to the products they are added to. The gelling power increases with the decrease of the hydroxypropyl group substitution. The gelling temperature decreases with the increase of the methyl groups substitution (Sarkar, 1979). However, given the complexity of the food, it is necessary to test the various degrees of substitution to have the desired food ingredients to the characteristics of the product to prepare. Galactomannans are polysaccharides composed of a main chain of mannose in branched linkage (β1→4) with single galactose residues on the carbon 6 of mannose. The galactomannans of guar gum exhibit a degree of branching higher than the one of the locust bean gum. The galactomannans are mainly used as thickeners and stabilizers (Kohajdová e Karovičová, 2009). The carrageenans are sulfated polysaccharides composed, generally, by (β1→3) galactose and (α1→4)-3,6-anhydrogalactose residues, alternately. The carrageenans are used to increase the loaf volume and moisture content, with low water activities. They are used in dairy products due to the ability to interact with calcium ions (Imeson, 2000). Xanthan is a polysaccharide with a main chain of glucose in branched linkage (β1→4) in C-3 by the side chains of a trisaccharide composed of mannose in linkage (β1→4) to the glucuronic acid, which in turn links in (β1→2) to the mannose residue that links in (α1→3) to the chain of glucose residues. Additionally, the first mannose residue is acetylated in the position 6 and the terminal mannose may establish a linkage with pyruvic acid in the position 4 or 6 that may occur in less than 40% of the terminal mannose residues (Ptaszek et al., 2007). These substitutes can modulate the properties of the xanthans, which are widely used in pastry due to their high viscosity at low concentration and pseudoplastic character and high stability to temperature and pH variations (Sun et al., 2007). Their addition to doughs increases the tenacity and decreases the extensibility, resulting in greater rigidity (Lazaridou et al., 2007).

To increase the crunchy and the crispy effect of the doughs, reducing agents (cysteine, glutathione, deactivated yeast, ascorbic acid, etc.) and endopeptidases (papainases, alcalase, trypsin) are often used(Lallemand, 1996). In WO2005077194 patent, the use of endopeptidases was already applied to puff pastries to prolong the crunchy effect of the croissant, and may be reheated in microwave oven while maintaining the crunchy properties (Hargreaves et al., 2005). Another alternative to obtain crispy puff pastries using microwave radiation as a source of energy to the confection of stuffed pastries is the use of barriers to the migration of water. In the patent US6503546 (Ferrari-Philippe e Tharrault, 2003), the barrier is composed of a mixture of 89% of low melting point fat (preferably medium-chain triglycerides), 10% protein (preferably calcium caseinate) and 1% hydrocolloid (preferably iota-carrageenan). This preparation is sprayed on top of the puff pastry, the stuffing then being placed with a high percentage of water. To reduce the impact of microwave radiation in the stuffing, it is also sprayed on its surface. The food thus prepared is able to be cooked in a microwave oven so as to obtain a crunchy puff pastry. Other barriers to the migration of water from the stuffing to the puff pastry, being this previously confectioned, have also been proposed in patents EP0638488A1 (Rees, 1995) and EP0509566A1 (Van e Verhoef, 1992). It is, in both cases, the use of the emulsifying agent E472a - ACETEM (mono- and di-acetylated acylglycerides) that forms a hydrophobic barrier. Due to poor adhesion to the puff pastry after confection, it needs to be applied on a physical support, consisting of pastry shortcrust or rice paper. However, this solution only has application in products whose dough and stuffing can be made-up separately, which is not the case of custard tart.

Document AU1136200 describes a microwavable freeze-thaw stable food product typically in the form of a custard filled pastry tart. The food product comprises a microwavable freeze/thaw stable custard composed of soy milk, sugar, vanilla, starch, xanthan gum, turmeric, locus bean gum, a freeze/thaw-stable cook-up starch as thickener, sodium citrate, red bean, mung bean, agar agar, or coconut; and a pastry crust composed of tapioca flour, white and brown rice flour, soya bean flour, maize flour, almond meal, candle nuts, pine nuts, coconut, sugar, golden syrup, xanthan gum, vanilla, water, salt, and non-dairy based soya margarine. This document differs from the present application since neither the puff pastry or the custard cream described in this document comprise HPMC. The margarine used in this document does not comprise HPMC.

Document WO9725869 discloses an improved ready-to-bake frozen, parproofed, laminated doughs comprising: flour and (on flour): 45-70 wt.% water, 5-10 wt.% yeast, 0.1-4.0 wt.% emulsifier, 0.2-5 wt.% of a pectin, 0-10 wt.% protein, 0-10 wt.% modified starch. The laminated product was parproofed, so that its specific volume before baking is less than 1.7 ml/g and contains 8-128 fatlayers and (on flour) 35-85 wt.% fat. The puff pastry of this document does not comprise HPMC and dietary fibers selected from the group comprising rice flour and soybean extract, the custard cream does not comprise HPMC as well. This document does not describe a production process of custard tarts and the margarine used in preparing the laminated dough does not comprise HPMC either.

Document US2007020369 discloses dough compositions that can be baked to provide baked articles (e.g., cinnamon rolls) having an extended shelf life of about 7 days or greater (e.g., about 14 days, about 21 days, or about 28 days or greater). The dough composition may be a developed dough compositions or an under-developed dough composition. The dough compositions may include one or more shelf life enhancing agents. The puff pastry in this document does not comprise xanthan. This document differs from the present application since it does not describe a production process of custard tarts and the margarine used in the laminated dough does not comprise HPMC.
Document WO2011109300 discloses a shelf-stable, savory, filled food products including at least two components having different textures and methods for making the food products are provided herein. The food products have a shelf life of at least about six months when stored at about 70°F in hermetically sealed film packaging. The savory filled food products have an intermediate water activity (e.g., about 0.5 to about 0.8), which promotes increased shelf life at room temperature.
This document differs from the present application since the puff pastry or the custard cream described in the document do not comprise HPMC, it does not disclose a production process of custard tarts and the margarine used in the layered dough does not comprise HPMC.

Document EP1120043 discloses a method of preparation of a frozen flaky pastry. A mixture of 34-45 wt.% flour, 0.5-1 wt.% salt, 2.5- 5 wt.% sugar 2-3 wt.% buttermilk powder and 0.5-1 wt.% emulsifier is pre-mixed. During mixing 16-20 wt.% water, 3-6 wt.% whole egg and 2-3.5 wt.% yeast are added. At ambient temperature 20-30 wt.% plastic fatty matter is added in pieces and the paste is extruded. Two or more layers of paste are superposed and laminated. The paste is placed in a fermentation chamber, cooked, glazed with a syrup and rapid frozen without cooling and allowing to partially dehydrate. The paste may be frozen between lamination and fermentation and a softening stage may occur between freezing and fermentation. Chopped and/or pureed foodstuffs and/or a sauce and/or a cream may be placed onto the paste before fermentation. Independent claims are included for a fermented, pre-cooked frozen flaky pastry which shows no sign of staling after thawing and has on an upper surface and edible crust, which may contain hydrocarbons or hydrocarbon derivatives (sic) and may be flavored and for a cooked dish containing the claimed flaky pastry.

This document differs from the present application since the puff pastry described therein does not comprise HPMC and dietary fibers such as rice flour or soybean extract, and the custard cream, or the margarine to prepare the puff pastry, do not comprise HPMC.

Document JP2005269993 describes a quality improver enabling cream puff pastry to have clear and crisp texture and a hardness suitable for filling the pastry with filling, and to sustain the clear and crisp texture after filling with the filling; and to provide the cream puff pastry having the properties. The quality improver for the cream puff pastry comprises an egg shell powder. The cream puff pastry contains 0.2-5% egg shell powder based on the dried weight of the whole cream puff pastry.
This document differs from the present application since the puff pastry, the custard cream, or the margarine to prepare the puff pastry, do not comprise HPMC.

Document JP2006191873 describes an emulsified oil and fat composition for producing a shell of cream puff, more precisely, especially, the high-quality shell characterized by the texture with good meltability in the mouth, and having high quality and good shape; and to provide a method for stably mass-producing the composition. The emulsified oil and fat composition for producing the shell of the cream puff contains at least thickening polysaccharides selected from carrageenan, gellan gum, HM pectin and alginic acid the content of which is regulated so as to be 0.05-1.2 wt.% based on the whole of the emulsified oil and fat composition for the shell of the cream puff.

This document differs from the present application since the puff pastry described therein does not comprise HPMC, xanthan and dietary fibers such as rice flour and soybean extract. The custard cream, or the margarine to prepare the puff pastry, does not comprise HPMC.

Document US 2009311387 discloses hydrated fat piece compositions along with various methods of making hydrated fat piece compositions. Also disclosed are dough compositions and baked articles made using the hydrated fat piece compositions of the invention. This document differs from the present application since it does not disclose a custard cream comprising HPMC, or the production of custard tarts.

Document WO9507025 discloses laminated dough systems, comprising alternating layers of dough and laminated fat, which laminated fat layers contain a water-binding agent, while simultaneously at least one of the outer layers of the system is provided with a moisture barrier layer display improved properties like crispness, when subjected to microwaves.
This document differs from the present application since it does not disclose a puff pastry comprising HPMC, xanthan and dietary fibers such as rice flour and soybean extract. This document does not disclose a custard cream comprising HPMC or a production process of custard tarts. The fat system disclosed in this document does not comprise HPMC.

Document EP2336191 discloses "hydroxypropylmethylcellulose having a high thermal gelation temperature and a high thermal gel strength and a method for producing the same and a food comprising the hydroxypropylmethylcellulose". More specifically, it describes the production of HPMC having chemical characteristics that promote gelation characteristics at high temperatures, suitable for its use in foods. This document differs from the present application since it does not disclose a puff pastry comprising HPMC, xanthan and dietary fibers such as rice flour and soybean extract. This document does not provide a production process of custard tarts.

### Summary

The present application describes a modified formulation of puff pastry and custard cream that allows preparing custard tarts ready for consumption after heating in microwave oven. Despite stuffed crispy puff pastry products after heating in microwave oven are described, it has never been described a formulation allowing simultaneous baking and filling of the puff pastry, that after quick-freezing and heating in microwave oven maintains its crispness and *sui generis* characteristics. The custard tarts are a product whose physical characteristics are only obtained by the simultaneous confection of puff pastry and custard cream. The present application describes a modified formulation of puff pastry and custard cream for the preparation of custard tarts for reheating in a domestic microwave oven.

The present application also describes a production process of custard tarts defined in claim 2 for reheating in a domestic microwave oven which comprises the following steps:
- preparation of the puff pastry with the addition of margarine containing hydroxypropylmethylcellulose (HPMC) to the mixture of flour, water, salt, dietary fiber and xanthan;
- custard cream preparation with the addition of hydroxypropylmethylcellulose (HPMC) to the mixture of sugar and flour.

In one embodiment, the dietary fibers are selected from the group comprising rice fiber and soybean extract.

In another embodiment, the custard tart confection is made in a conventional oven, selected from the group which comprises convection oven, electric oven, wood oven and home oven.

Yet in one embodiment, the conservation of the custard tarts is achieved by freezing.

In one embodiment, freezing is carried out by quick-freezing, at negative 45 °C.

### General Description

The process of the present application is based on the formulation of puff pastry and cream, allowing preparation of custard tarts ready for consumption after reheating in a microwave oven of custard tarts previously prepared and preserved by quick-freezing, keeping the same characteristics of the custard tart just taken out of a conventional oven.

This is possible by incorporation in the formulation of puff pastry and custard cream of hydrocolloids-based food ingredients. These ingredients allow dough strengthening and water stabilization preventing its migration, providing a crispy and crunchy puff pastry after reheating. The addition of hydrocolloids, in particular to hydroxypropylmethylcellulose (HPMC), to creams, reduces the size of the ice crystals in frozen products and prevents boiling during heating, helping to maintain the cream structure.

The raw custard tart is baked in a conventional oven and deep frozen in suitable containers. The custard tart may be consumed after reheating in domestic microwave oven, presenting the same aspect, taste, texture and aroma of a custard tart cooked to order in conventional oven. The puff pastry is crunchy, crispy and without disruptions and the custard cream has the pellicle intact, bright and without signs of boiling.

The puff pastry is prepared by adding xanthan, soy extract and rice fiber to the flour. At the same time the hydroxypropylmethylcellulose (HPMC) hydrocolloid is added to the margarine to stabilize the water of the margarine, preventing its migration to the dough during the reheating process. After kneading and rest, the dough is added to modified margarine, followed by distension, lamination and winding of the dough.

The cream is prepared by adding HPMC to the sugar and flour. The addition of HPMC allow the custard cream to be frozen without losing its rheological characteristics after thawing and enabling the reheating in a microwave oven without boiling. The mixture of sugar with the flour and HPMC is added to the boiled mixture of milk and cream margarines. The resulting liquid is cooled to allow adding yolks.

The custard tart is prepared by molding the dough to the metal container with the custard tart shape, which is then filled with cream and placed in the convection oven for the time needed to obtain a product with the sui generis characteristics recognized to the custard tart.

After cooling, the custard tarts are packaged and preserved by quick-freezing, being ready to be marketed as quick-frozen product.

### Description of the Figures

For an easier understanding of the invention join the attached figures, which represent preferred embodiments of the invention that, however, are not intended to limit the scope of this invention.

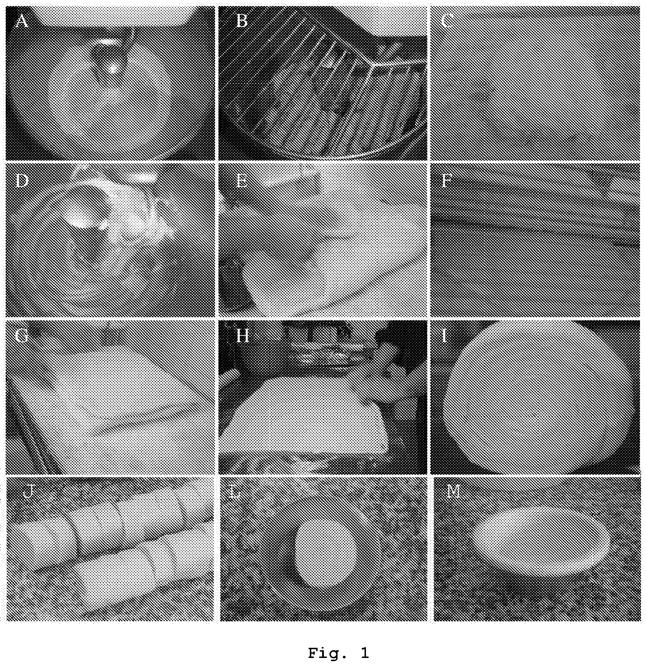

Figure 1: Representation of the puff pastry production for custard tart preparation with properties allowing it to be reheated in domestic microwave oven, where the reference letters represent:
   A. Dry ingredients;
   B. Kneading;
   C. Dough at rest;
   D. Mixture of margarine with HPMC K15M;
   E. Introduction of margarine in the dough;
   F. Distension of the dough;
   G. Simple turn in the dough;
   H. Winding of the dough;
   I. Detail of layers in the puff pastry roll;
   J. Cut puff pastry discs;
   L. Disc disposal in an appropriate metallic form;
   M. Puff pastry opened in the metallic form.

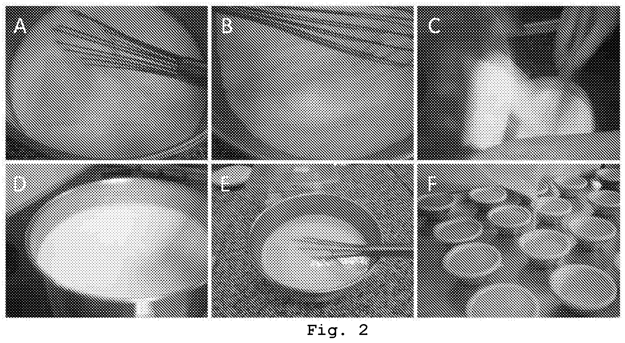

Figure 2: Representation of custard cream production for custard tart preparation with properties so it can be reheated in domestic microwave oven, where the reference letters represent:
   A. Milk and margarine are made boiling.
   B. Flour, sugar and HPMC K15M are dry mixed;
   C. Mixture of flour, sugar and HPMC K15M is added to boiling milk with margarine;
   D. The mixture is mixed until it acquires the desired consistency;
   E. Mixture is cooled at room temperature;
   F. After the addition of egg yolks, the custard cream is added to the open forms.
Figure 3: Representation of custard tart production with properties so it can be reheated in domestic microwave oven, where the reference letters represent:
   A. Confection in conventional oven of the custard tarts;
   B. Custard tarts just taken out of a conventional oven;
   C. Custard tarts in an appropriate packaging for conservation by quick-freezing.
Figure 4: Representation of the reheating of custard tart in domestic microwave oven, where the reference letters represent:
   A. Reheating of the custard tart in microwave oven;
   B. Custard tart after reheating in a microwave oven;
   C. Detail of glossy and intact pellicle of the custard tart after reheating in a microwave oven.

### Description of the embodiments

### 1. Production of the puff pastry (Figure 1)

The first step of the production process of the puff pastry of custard tart that can be prepared in a domestic microwave oven consists of preparing a dry mixture of flour, preferably type 55 wheat flour, xanthan, preferably 2% relative to the weight of the flour, soy extract and rice fiber, preferably 6% if the Prorice mixture is used, and sodium chloride, preferably 2% **(1.A).** Water is joined to the mixture, preferably 60% relative to the weight of the flour, and is kneaded first at low speed and then at fast speed, the amount of water needed may be rectified during kneading **(1.B).** After completion of the kneading, a ball is formed with the dough and it is left to rest, preferably for half an hour **(1.C).** The dough is then placed on a floured surface and opened in cross leaving the middle with greater height of the dough. The mixture of margarine described in the following will be placed in the middle of the cross.

Parallel to the kneading, slices of margarine are prepared, preferably half flaky margarine, sprinkled with HPMC, preferably in the proportion of 10 parts of margarine per 1 part of HPMC (w/w). On top of the hydrocolloid powder, a new slice of margarine is placed, preferably of the same thickness **(1.D).** The margarine is placed in the center of the dough and the tips of the cross are folded over, pulling slightly to cover the entire margarine **(1.E).** The top of the dough is sprinkled with flour and the tips are sealed with the aid of a roll. After the rest of the dough containing margarine, preferably for 30 minutes, the dough is mechanically distended **(1.F),** being given, preferably, 2 to 3 simple turns forming preferably 7 to 25 sheets **(1.G)**. After the lamination process the puff pastry is left to rest, preferably for 0.5 to 12 hours, and further distention until the thickness of preferably 4 mm. When the puff pastry is distended, the top is brushed with water and rolled until the dough cylinder **(1.H)** has the diameter of the base of the custard tart shape **(1.I)**. The puff pastry roll must rest, preferably at 4 °C for at least 6 hours. The rolled puff pastry is later cut into discs **(1.J),** preferably with 26 g. The puff pastry disc is placed in the middle of the form **(1.L)** and opened in order to completely cover the form **(1.M)**. The open dough in the form is then filled with custard cream.

### 2. Production of the custard cream (Figure 2)

The first step of the production process of the custard tart cream consists in adding margarine, preferably cream margarines, to the milk, in the proportion of 1 part to 20 parts of milk (w/w). The mixture is led to boiling **(2.A).**

In parallel, a dry-mixture of sugar, flour, preferably type 55 wheat flour, and HPMC is prepared, preferably in the proportion of 90 parts sugar, 18 parts of flour and 1 part of HPMC (w/w/w) **(2.B).**

The mixture of the sugar with the flour and the HPMC is added to the boiled mixture of milk and cream margarines, in the proportion of 1.75 parts for 1 (w/w) **(2.C).** The mixture is mixed until acquiring the desired consistency **(2.D).** The resulting cream removed from the heat and cooled **(2.E)** so that the yolks are added, preferably in the proportion of 1 part for 10 parts. The cream is placed in the coated metallic form by the puff pastry prepared as described in 1 **(2.F).**

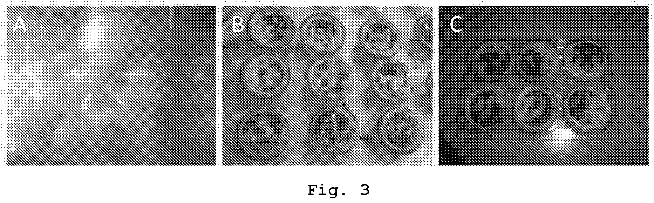

### 3. Production of the custard tart (Figure 3)

The custard tart prepared as described in 1 and 2 is placed in a tray, preferably, perforated, and placed in convection oven, preferably, 250 °C for 10 minutes **(3.A).** After that, the custard tarts are removed from the oven and cooled, preferably at room temperature **(3.B).** After cooling, the custard tarts are placed in packaging suitable to be quick-frozen. The quick-freezing takes place, preferably, until negative 45 °C and should preferably be kept at a temperature of negative 20 °C until it is sold as a quick-frozen product **(3.C)**.

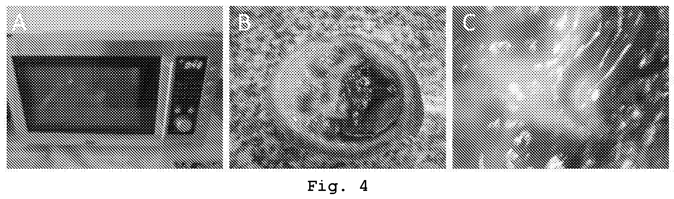

### 4. Consumption of the reheated custard tart (Figure 4)

The custard tart may be consumed after reheating in a microwave oven, preferably for 1 minute at a power of 700 W **(4.A).** The temperature of the cream in these conditions should be approximately 90 °C, the custard tart presenting the same aspect, taste, texture and aroma of a custard tart cooked to order in a conventional oven **(4.B).** The puff pastry should be crunchy, crispy and without disruptions and the cream should have the pellicle intact, bright and without signs of boiling **(4.C).**

### Examples

Next three examples will be presented that should not be considered limiting.

### Example 1

The puff pastry of the custard tart that may be reheated in a microwave oven can be made by mixing 2.5 kg of wheat flour type 55 with 52 g of xanthan gum (E415), 160 g of ProRice F100 (both supplied by GAC - Ingredientes e Produtos Alimentares, Lda), 50 g of salt and 1.5 L of water. Is kneaded for 3 minutes at low speed and 6 minutes at fast speed.

For the amount of flour described, it should be used 100 g of half flaky margarine stuffed with 10 g of HPMC K15M (E464 - Hydroxypropyl with 22% of substitution with methyl groups and 8.1% of hydroxypropyl groups, supplied by the Brenntag Portugal Produtos Químicos, Lda.).

Margarine is incorporated into the dough in cross and the dough with the margarine is laminated, preferably with two simple turns forming preferably 7 sheets. After the rest of the puff pastry, there follows the winding and storage at 4 °C overnight. The rolled puff pastry is cut into discs of 26 g, which are opened so as to completely coat the forms and to receive the custard cream.

The custard tart cream to be consumed after reheating in a microwave may be made by adding 125 g of cream margarines to 2.5 L of semi-skimmed cow's milk, the mixture being boiled. Once it boils, a mixture of 1.25 kg of sugar, 250 g of type 55 wheat flour, 14 g of HPMC K15M (E464) is added. It can also be used, for example, HPMC K4M (E464). To the resulting liquid, after cooled at room temperature, 450 g of egg yolk, preferably of chicken, are added. The cream is placed in the metallic form coated by the prepared puff pastry.

The raw custard tart is placed in a perforated tray, which is placed in a convection oven at 250 °C for 10 minutes. After this period, the custard tarts are removed from the oven and cooled at room temperature up to a temperature of 25-40 °C. The custard tarts are then placed in appropriate packaging for quick-freezing (polyethylene terephthalate blister of 6 cavities, Sitecna), the temperature being negative 45 °C. Storage should occur at negative 20 °C until it is sold as quick-freezing product.

The pre-cooked custard tart may be consumed after reheating in domestic microwave oven. For one unit (one custard tart), irradiation at a power of 700 W for 1 minute may be used. The temperature of the custard cream in these conditions should be approximately 80-95°C, the custard tart presenting the same aspect, taste, texture and aroma of a custard tart cooked to order in a conventional oven. The puff pastry should be crunchy, crispy and without disruptions and the custard cream should not show signs of boiling and should have the pellicle intact and bright.

### Example 2 (not part of the invention)

The dough of the custard tart is prepared according to what is described in example 1.

The cream of the custard tart may be made by adding 125 g of margarine to 2.5 L of semi-skimmed cow's milk, the mixture being boiled. Once it boils, a mixture of 1.25 kg of sugar and 250 g of type 55 wheat flour is added. When boiling ceases, the mixture is removed from the heat source and from 7 to 11.5 g of xanthan (E415) mixed with 7 to 11.5 g of CMC (E466) are added. The equimolar addition of hydrocolloids results in a more fluid cream. The fluidity of the cream increases with the decrease of hydrocolloids in concentration. After cooling down to room temperature, 450 g of egg yolk are added. Subsequently the cream is placed in the coated metallic form by the prepared puff pastry. The steps of confection, quick-freezing, storage and reheating in a microwave oven follow the described in Example 1.

### Example 3 (with CMC and carrageenan - not part of the invention)

The puff pastry of the custard tart that may be reheated in a microwave oven can be made by mixing 2.5 kg of type 55 wheat flour with 52 g of CMC (E466) or 52 g of HPMC (E466) or 52 g of carrageenan (E407), 160 g of ProRice F100 (both supplied by GAC - Ingredientes e Produtos Alimentares, Lda), 50 g of salt and 1.5 L of water. Is kneaded for 3 minutes at low speed and 6 minutes at fast speed.

For the amount of flour described, it should be used 100 g of half flaky margarine stuffed with 10 g of HPMC K15M (E464 - Hydroxypropyl with 22% of substitution with methyl groups and 8.1% of hydroxypropyl groups, supplied by the Brenntag Portugal Produtos Químicos, Lda.).

Margarine is incorporated into the dough in cross and the dough with the margarine is laminated, preferably with two simple turns forming preferably 7 sheets. After the rest of the puff pastry, there follows the winding and storage at 4 °C overnight. The rolled puff pastry is cut into discs of 26 g, which are opened so as to completely coat the forms and to receive the custard cream.

The custard tart cream to be consumed after reheating in a microwave, may be done in accordance with the described in example 1 or 2.

The steps of confection, conservation by quick-freezing and reheating in a microwave oven follow the described in example 1. The custard tarts obtained by the described in example 3, after reheating in a microwave oven, must rest at room temperature for 2-5 minutes to allow the dough to acquire its crunchy texture.

### References

### Scientific papers:

Barcenas, M. E.; Benedito, C.; Rosell, C. M. (2004). Use of hydrocolloids as bread improvers in interrupted baking process with frozen storage. Food Hydrocolloids, 18, 769-774.
Imeson, A. (2000). Carrageenans. In G. O. Phillips & P. A. Willimas (Eds.), Handbook of Hidrocolloids, (pp. 87-102): Cambridge: Woodhead Publishing Ltd.
Kohajdová, Z.; Karovičová, J. (2009). Application of hydrocolloids as baking improvers. Chemical Papers, 63(1), 26-38.
Lallemand Baking Update. (1996). A guide to reducing agents. Vol. 1, n° 7.
Lazaridou, A.; Duta, D.; Papageorgiou, M.; Belc, N.; Biliaderis, C. G. (2007). Effects of hydrocolloids on dough rheology and bread quality parameters in gluten-free formulations. Journal of Food Engineering, 79, 1033-1047.
Ptaszek, P.; Lukasiewicz, M.; Achremowicz, B.; Grzesik, M. (2007). Interaction of hydrocolloid networks with mono- and oligosaccharides. Polymer Bulletin, 58, 295-303.
Sarkar, N. (1979). Thermal gelation properties of methyl and hydroxypropyl methylcellulose. Journal of Applied Polymer Science, 24, 1073-1087.
Sun, C.; Gunasekaran, S.; Richards, M. P. (2007). Effect of xanthan gum on physicochemical properties of whey protein isolate stabilized oil-in-water emulsions. Food Hydrocolloids, 21, 555-564

### Patents:

E. Pat. N° 0638488 (Rees, H.), 1995. "Microwavable food product containing a moisture resistant edible internal barrier".
E. Pat. N° 0509566 (Van, D. G. L. M. Verhoef, N. J. F. D.), 1992. "Puff pastry laminates".
U.S. Pat N° 6503546 (Ferrari-Philippe, F. Tharrault, J. F.), 2003. "Crisp filled pastry after microwave baking".
W.O. Pat. N° 077194 (Hargreaves, N. G.; Brinker, E. M.; Scharf, U.; Plijter, J. J.; Plijter, J.; Van, S. M. W. L. J.; Noort, M. W. J.eHuscroft, S. C.), 2005. "Laminated dough products and the use of protease at the outer surface to improve crispiness thereof after baking".

## Claims

1. Modified formulation of puff pastry and custard cream suitable for the preparation of custard tarts for reheating in a domestic microwave oven wherein:
- the puff pastry and custard cream comprise hydroxypropylmethylcellulose (HPMC) and the puff pastry further comprises xanthan; and
- the puff pastry comprises dietary fibers selected from the group comprising rice fiber and soybean extract.

2. Production process of custard tarts as defined in claim 1 for reheating in a domestic microwave oven, which comprises the following steps:
- preparation of the puff pastry with the addition of margarine containing hydroxypropylmethylcellulose (HPMC) to the mixture of flour, water, salt dietary fiber and xanthan;
- custard cream preparation with the addition of hydroxypropylmethylcellulose (HPMC) to the mixture of sugar and flour.

3. Production process of custard tarts according to claim 2, **characterized in that** the dietary fibers are selected from the group comprising rice fiber and soybean extract.

4. Production process of custard tarts according to claim 2 or claim 3, **characterized in that** the confection is performed in a conventional oven, selected from the group that comprises convection oven, electric oven, wood oven and home oven.

5. Production process of custard tarts according to any of claims 2 to 4, **characterized by** further comprising a conservation step.

6. Production process of custard tarts according to claim 5, **characterized in that** the conservation of the custard tart is achieved by freezing.

7. Production process of custard tarts according to claim 6, **characterized in that** the freezing is achieved by quick-freezing at negative 45 °C.

## Patentansprüche

1. Modifizierte Blätterteig- und Vanillecreme-Rezeptur, die für die Zubereitung von Puddingtörtchen zur Aufwärmung in einem häuslichen Mikrowellen geeignet ist, wobei:
- der Blätterteig und die Vanillecreme Hydroxypropylmethylcellulose (HPMC) enthalten und der Blätterteig zudem noch Xanthan enthält; und
- der Blätterteig noch Ballaststoffe enthält, die aus einer, aus Reisfasern und Sojabohnenextrakt bestehenden Gruppe ausgewählt wurden.

2. Herstellungsverfahren von Puddingtörtchen gemäß Anspruch 1 zur Aufwärmung in einem häuslichen Mikrowellen, welches aus folgenden Schritten besteht:
- Zubereitung des Blätterteigs unter Zugabe von Hydroxypropylmethylcellulose (HPMC) enthaltender Margarine zur Mischung aus Mehl, Wasser, Salz, Ballaststoffen und Xanthan;
- Zubereitung der Vanillecreme unter Zugabe von Hydroxypropylmethylcellulose (HPMC) zur Mischung aus Zucker und Mehl.

3. Herstellungsverfahren von Puddingtörtchen gemäß Anspruch 2, **dadurch gekennzeichnet, dass** die Ballaststoffe aus einer, aus Reisfasern und Sojabohnenextrakt bestehenden Gruppe ausgewählt werden.

4. Herstellungsverfahren von Puddingtörtchen gemäß Anspruch 2 oder Anspruch 3, **dadurch gekennzeichnet, dass** die Zubereitung in einem herkömmlichen Ofen erfolgt, der aus der Gruppe, bestehend aus einem Heißluftofen, Elektrobackofen, Holzofen und Backofen gewählt wurde.

5. Herstellungsverfahren von Puddingtörtchen gemäß einem der Ansprüche 2-4, **dadurch gekennzeichnet, dass** es noch einen Konservierungsschritt beinhaltet.

6. Herstellungsverfahren von Puddingtörtchen gemäß Anspruch 5, **dadurch gekennzeichnet, dass** die Konservierung des Puddingtörtchens durch Einfrieren erreicht wird.

7. Herstellungsverfahren von Puddingtörtchen gemäß Anspruch 6, **dadurch gekennzeichnet, dass** das Einfrieren durch eine Tiefkühlung bei minus 45 °C erfolgt.

## Revendications

1. Formulation modifiée de la pâte feuilletée et de la crème pâtissière appropriées pour la préparation de flans pâtissiers à réchauffer dans un four à micro-ondes domestique, dans laquelle :
- la pâte feuilletée et la crème pâtissière comprennent de l'hydroxypropylméthylcellulose (HPMC) et la pâte feuilletée comprend en outre du xanthane ; et
- la pâte feuilletée comprend des fibres alimentaires sélectionnées dans le groupe comprenant la fibre de riz et l'extrait de soja.

2. Procédé de fabrication de flans pâtissiers selon la revendication 1 pour le réchauffage dans un four à micro-ondes domestique, comprenant les étapes suivantes :
- préparation de la pâte feuilletée avec l'ajout de margarine contenant de l'hydroxypropylméthylcellulose (HPMC) au mélange de farine, d'eau, de fibres alimentaires salées et de xanthane ;
- préparation de crème pâtissière avec l'ajout d'hydroxypropylméthylcellulose (HPMC) au mélange de sucre et de farine.

3. Procédé de fabrication de flans pâtissiers selon la revendication 2,
**caractérisé en ce que** les fibres
alimentaires sont sélectionnées dans le groupe comprenant la fibre de riz et l'extrait de soja.

4. Procédé de fabrication de flans pâtissiers selon la revendication 2 ou la revendication 3,
**caractérisé en ce que** la confection
est réalisée dans un four conventionnel, sélectionné dans le groupe comprenant le four à convection, le four électrique, le four à bois et le four domestique.

5. Procédé de fabrication de flans pâtissiers selon l'une quelconque des revendications 2 à 4,
**caractérisé en ce qu'**il comprend en outre une étape de conservation.

6. Procédé de fabrication de flans pâtissiers selon la revendication 5,
**caractérisé en ce que** la conservation du flan pâtissier est obtenue par congélation.

7. Procédé de fabrication de flans pâtissiers selon la revendication 6,
**caractérisé en ce que** la congélation est obtenue par congélation rapide à une température de moins 45 °C.
